# DEMANDE DE BREVET EUROPEEN

(11) **EP 4 224 806 A1**
(43) Date de publication de la demande: **09.08.2023**
(21) Numéro de dépôt: 23154104.6
(22) Date de dépôt: 31.01.2023
(51) Int. Cl.: H04L 27/26, H03M 13/45, H04L 5/00, H04W 52/34

(54) **PROCÉDÉS DE GÉNÉRATION ET DE DÉMODULATION D'UN SIGNAL RADIOFRÉQUENCES DU TYPE MULTI-PORTEUSES, PRODUITS PROGRAMME D'ORDINATEUR ET DISPOSITIFS CORRESPONDANTS**

(30) Priorité: 02.02.2022 FR 2200930
(71) Demandeur: Commissariat à l'énergie atomique et aux énergies alternatives, 75015 Paris (FR)
(72) Inventeur: DEMMER, David, 38054 Grenoble Cedex 09 (FR); DORE, Jean-Baptiste, 38054 Grenoble Cedex 09 (FR)
(74) Mandataire: Brevalex

(57) **Abrégé**

L'invention concerne un procédé de génération d'un signal radiofréquences du type multi-porteuses destiné à être transmis sur un canal de transmission radiofréquences en respectant un masque spectral d'émission, le masque définissant une exigence d'atténuation du signal relativement à une puissance utile du signal dans une bande de fréquences utiles inférieure à la largeur du canal, l'exigence d'atténuation étant définie pour au moins une zone de transition fréquentielle entre un bord de la bande de fréquences utiles et un bord adjacent du canal de transmission. Un tel procédé comprend, pour au moins une sous-porteuse destinée à être transmise dans une zone de transition fréquentielle :
- une modulation (E300) de la sous-porteuse par un symbole de modulation correspondant, délivrant une sous-porteuse modulée du signal ; et
- un contrôle de puissance (E310) de la sous-porteuse modulée relativement à la puissance utile de sorte à respecter le masque spectral d'émission dans la zone de transition fréquentielle.

## Description

### Domaine de l'invention

Le domaine de l'invention est celui de la transmission de données via l'utilisation d'un signal radiofréquences du type multi-porteuses.

L'invention se rapporte plus particulièrement à une méthode de génération et de démodulation d'un tel signal.

Une telle forme d'onde est utilisée dans de nombreux domaines liés à la transmission de données par liens radiofréquences. L'invention a ainsi des applications, notamment, mais non exclusivement, dans le domaine de la téléphonie mobile (e.g. réseaux 4G ou 5G tels que définis par le 3GPP (pour « 3rd Génération Partnership Project » en anglais)), des réseaux locaux sans fil WLAN (pour « Wireless Local Area Network » en anglais, e.g. utilisant le WiFi), les systèmes de radiodiffusion numérique (DVB-T (pour « Digital Video Broadcasting-Terrestrial » en anglais), ISDB-T (pour « Integrated Services Digital Broadcasting-Terrestrial » en anglais), DAB (pour « Digital Audio Broadcasting » en anglais)), l'accès internet sans fil à haut débit (WiMAX), les liaisons numériques asymétriques (xDSL), les liaisons point à point, etc.

### Art antérieur et ses inconvénients

Les systèmes de télécommunications utilisant une forme d'onde du type multi-porteuses sont bien connus dans l'état de la technique. Le principe d'une telle forme d'onde consiste à diviser le canal de transmission (ou bande de fréquences de transmission) en une pluralité de sous-canaux fréquentiels associés à des sous-porteuses, et à moduler chacune de ces sous-porteuses par des symboles de modulation représentant les données à transmettre.

La modulation multi-porteuses la plus répandue est sans aucun doute la modulation OFDM (pour « Orthogonal Frequency Division Multiplexing » en anglais). Cependant, dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymboles. L'insertion d'un intervalle de garde ou d'un préfixe conduit toutefois à une perte d'efficacité spectrale.

Par ailleurs, l'occupation spectrale d'un signal OFDM étant sensiblement plus importante que la bande de sous-porteuses qu'il utilise en raison de l'étalement des lobes secondaires, la bande de fréquences utiles dans laquelle les sous-porteuses véhiculent effectivement des symboles de modulation est inférieure à la largeur du canal. Les sous-porteuses situées fréquentiellement dans la zone de transition située entre la bande de fréquences utiles et le bord du canal sont émises avec une puissance nulle, i.e. ne transmettent aucunes données.

Afin d'améliorer le confinement spectral des formes d'ondes OFDM, il a été proposé d'utiliser une forme d'onde dite OFDM filtré. Il s'agit en fait d'appliquer un filtre temporel sur les symboles OFDM afin de réduire les lobes secondaires. Cependant, une telle approche via un filtrage temporel induit une augmentation de l'interférence intersymboles, ce qui nécessite d'augmenter l'intervalle de garde. La perte d'efficacité spectrale demeure ainsi entière. De plus à chaque configuration donnée, un nouveau filtre doit être calculé. Le cas le plus défavorable pour l'OFDM est l'accès avec spectre fragmenté ou le filtrage n'est plus simplement une fonction passe bas mais coupe bande. Les implémentations des filtres deviennent très complexes.

Une forme d'onde par banc de filtres ou FBMC (pour « Filter Bank Multi Carrier » en anglais) peut également être envisagée comme alternative à l'OFDM. Une comparaison entre les systèmes FBMC et les systèmes OFDM est présentée dans l'article de B. Farhang-Bouroujeny intitulé « OFDM versus filter bank multicarrier » publié dans IEEE Signal Processing Magazine, pp. 91-112, Mars 2011. Le principe des systèmes FBMC est basé sur une synthèse par banc de filtres à l'émission et une analyse par banc de filtres à la réception. Un tel système a été décrit en détail dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory » publié dans IEEE Trans. on signal processing, vol. 50, No 5, pp. 1170-1183, Mai 2002. Cependant, bien qu'améliorant le confinement spectral, la présence de zones de transition fréquentielle, même réduites, entre deux bandes de fréquences utiles semble toujours nécessaire.

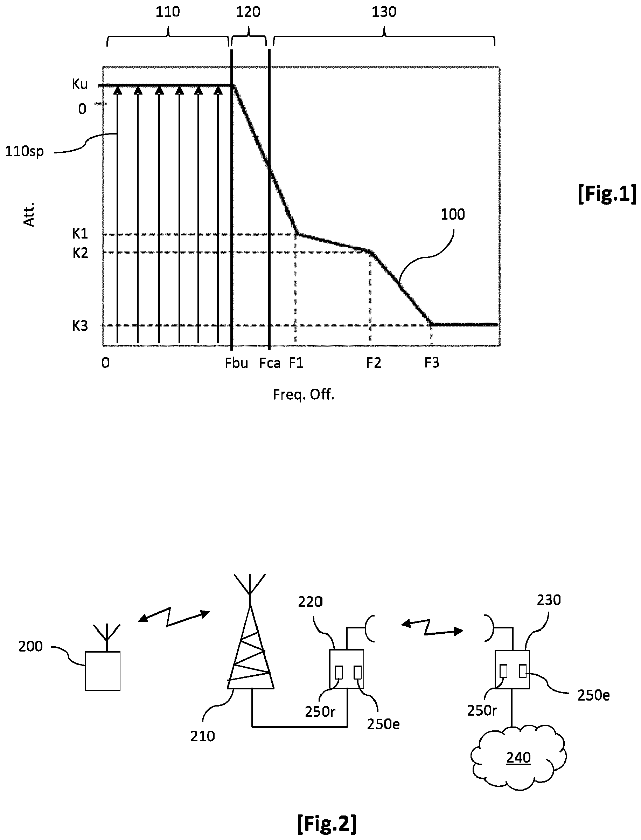

De la sorte, les standards actuels définissent les contraintes sur les signaux utilisés dans les systèmes utilisant des formes d'ondes du type multi-porteuses via des masques spectraux d'émission. Par exemple, la **[****Fig.1****]** illustre un masque 100 tel que défini dans le document de normalisation ETSI EN 302 217-2 V3.3.0 (2021-06), « Fixed Radio Systems; Characteristics and requirements for point-to-point equipment and antennes; Part 2: Digital systems operating in frequency bands from 1 GHz to 86 GHz; Harmonised Standard for access to radio spectrum. » Plus particulièrement, le masque 100 définit en fonction de la fréquence, une exigence d'atténuation du signal relativement à une puissance du signal, dite puissance utile Ku, dans une bande 110 de fréquences utiles inférieure à la largeur du canal. Dans le cas présent, le masque 100 est représenté tel que centré autour de la fréquence porteuse. En d'autres termes, il s'agit d'une représentation en bande de base, et pour les fréquences positives. Le spectre total du signal est obtenu par symétrie autour de la fréquence centrale, ici la fréquence nulle dans cette représentation en bande de base.

Plus particulièrement, la bande 110 de fréquences utiles s'étend, pour ce qui est des fréquences positives, jusqu'à la fréquence Fbu. Le canal de transmission s'étend quant à lui jusqu'à la fréquence Fca supérieure à la fréquence Fbu. La bande de fréquences s'étendant entre le bord Fbu de la bande de fréquences utiles et le bord adjacent Fca du canal de transmission correspond à la zone 120 de transition fréquentielle. Le canal de transmission comprend ainsi la bande 110 de fréquences utiles, dans laquelle les sous-porteuses sont des sous-porteuses 110sp modulées qui véhiculent effectivement des symboles de modulation, et la zone 120 de transition fréquentielle, dans laquelle les sous-porteuses sont émises avec une puissance nulle, i.e. ne transmettent aucunes données. La bande 130 de fréquence en dehors du canal de transmission correspond aux canaux adjacents. Dans une représentation totale du spectre du signal, i.e. symétrisée autour de la fréquence centrale, le masque 100 définit ainsi deux zones 120 de transitions fréquentielles entre la bande 110 de fréquences utiles et les canaux adjacents.

Le masque 100 définit par ailleurs un ensemble d'exigences d'atténuation K1, K2, K3, ... en fonction de fréquences correspondantes F1, F2, F3...

D'autres techniques ont également été envisagées afin d'améliorer l'efficacité spectrale des formes d'onde du type multi-porteuses. Par exemple, l'article de S. Kittipiyakul and T. Javidi, « Subcarrier allocation in OFDMA systems: beyond water-filling, » Conférence Record of the Thirty-Eighth Asilomar Conférence on Signals, Systems and Computers, 2004, pp. 334-338 Vol.1, divulgue une méthode d'allocation de puissance de transmission adaptée aux systèmes de communications utilisant des formes d'onde multi-porteuses. Le principe est d'utiliser la connaissance du canal de propagation et de favoriser les sous-porteuses modulées de la bande de fréquences utiles bénéficiant de canaux favorables sous la contrainte d'une puissance de transmission totale fixée. Cependant, cette technique nécessite la mise en oeuvre d'informations supplémentaires, e.g. issue de l'estimation de canal, ce qui la rend relativement complexe à mettre en oeuvre.

Il existe ainsi un besoin pour une technique alternative permettant d'améliorer l'efficacité spectrale des signaux radiofréquences basés une forme d'onde du type multi-porteuses.

### Exposé de l'invention

Selon un aspect de l'invention, il est proposé un procédé de génération d'un signal radiofréquences du type multi-porteuses destiné à être transmis sur au moins un canal de transmission radiofréquences en respectant un masque spectral d'émission associé au canal. Le masque définit, en fonction de la fréquence, une exigence d'atténuation du signal relativement à une puissance du signal, dite puissance utile, dans une bande de fréquences utiles inférieure à la largeur du canal. L'exigence d'atténuation est définie pour au moins une zone de transition fréquentielle entre un bord de la bande de fréquences utiles et un bord adjacent du canal de transmission. Selon un tel procédé, un dispositif de génération effectue :
- une modulation, par des symboles de modulation, d'une pluralité de sous-porteuses délivrant une pluralité correspondante de sous-porteuses modulées du signal destinées à être transmises dans la bande de fréquences utiles avec une puissance sensiblement égale à la puissance utile.

Le dispositif de génération effectue en outre, pour au moins une sous-porteuse destinée à être transmise dans une zone de transition fréquentielle :
- une modulation de la sous-porteuse par un symbole de modulation correspondant, délivrant une sous-porteuse modulée du signal ; et
- un contrôle de puissance de la sous-porteuse modulée relativement à la puissance utile de sorte à respecter le masque spectral d'émission dans la zone de transition fréquentielle, le contrôle de puissance étant limité à une amplitude de contrôle prédéterminé.

Ainsi, l'invention propose une solution nouvelle et inventive pour améliorer l'efficacité spectrale d'un lien radiofréquences basé sur une forme d'onde du type multi-porteuses (e.g. un signal du type OFDM, OFDM filtré ou FBMC).

Plus particulièrement, l'utilisation des sous-porteuses présentes dans les zones de transition fréquentielle permet d'accroitre le nombre total de sous-porteuses modulées et donc le débit d'information véhiculé par le signal au final pour un canal de transmission de largeur donné.

La présente technique est par ailleurs avantageusement mise en oeuvre avec une forme d'onde présentant de bonnes propriétés de confinement spectral (e.g. OFDM filtré ou FBMC), de telles formes d'ondes permettant d'utiliser plus de sous-porteuses proches du bord du canal de transmission considéré. Toutefois, la présente approche peut s'appliquer avec n'importe quel type de formes d'ondes du type multi-porteuses. En effet, le contrôle de puissance conduisant à une atténuation des sous-porteuses de sorte à suivre la décroissance du masque spectral d'émission dans la zone de transition fréquentielle permet de limiter la pollution des canaux adjacents via les lobes secondaires des sous-porteuses en question. Par ailleurs, le contrôle de puissance limité à une amplitude de contrôle prédéterminé permet de limiter la réduction du rapport signal à bruit sur les sous-porteuses. En effet, utiliser des sous-porteuses pour lesquelles la réduction du rapport signal à bruit serait supérieure au seuil considéré n'apporterait pas nécessairement de gain sur le débit de données véhiculées.

Selon certains modes de réalisation, ladite au moins une sous-porteuse destinée à être transmise dans une zone de transition fréquentielle est transmise sur une fréquence porteuse adjacente à la bande de fréquences utiles.

Ainsi, le spectre du signal généré est continu. Par ailleurs, les sous-porteuses les plus proches de la bande de fréquences utiles sont celles dont la puissance est la moins réduite afin de respecter le masque spectral d'émission. Le rapport signal à bruit est ainsi mieux préservé, et le débit d'information véhiculé par le signal amélioré.

Selon certains modes de réalisation, un schéma de codage et/ou un ordre de modulation de ladite au moins une sous-porteuse destinée à être transmise dans une zone de transition fréquentielle est adapté par rapport au schéma de codage et/ou à l'ordre de modulation des sous-porteuses destinées à être transmises dans la bande de fréquences utiles de sorte à prendre en compte le contrôle de puissance.

Ainsi, la réduction du rapport signal à bruit sur les sous-porteuses est prise en compte via la réduction de l'ordre de la modulation utilisée pour les sous-porteuses en question et/ou via un schéma de codage plus robuste, quand bien même le débit s'en trouve légèrement réduit.

Selon certains modes de réalisation, la modulation et le contrôle de puissance sont mis en oeuvre pour une pluralité de sous-porteuses destinées à être transmises dans une zone de transition fréquentielle.

Selon certains modes de réalisation, le signal radiofréquences est destiné à être transmis sur une pluralité de canaux de transmission radiofréquences en respectant un masque spectral d'émission pour chaque canal. Le dispositif de génération effectue pour chaque canal de transmission :
- la modulation d'une pluralité de sous-porteuses délivrant une pluralité correspondante de sous-porteuses modulées du signal destinées à être transmises dans la bande de fréquences utiles du canal ; et
- pour au moins une sous-porteuse destinée à être transmise dans une zone de transition fréquentielle du canal, la modulation de la sous-porteuse et le contrôle de puissance de la sous-porteuse modulée.

Selon un autre aspect de l'invention, il est proposé un procédé de démodulation d'un signal radiofréquences du type multi-porteuses destiné à être transmis sur au moins un canal de transmission radiofréquences en respectant un masque spectral d'émission associé au canal, le masque définissant, en fonction de la fréquence, une exigence d'atténuation du signal relativement à une puissance du signal, dite puissance utile, dans une bande de fréquences utiles inférieure à la largeur du canal. L'exigence d'atténuation est définie pour au moins une zone de transition fréquentielle entre un bord de la bande de fréquences utiles et un bord adjacent du canal de transmission. Le signal comprend :
- une pluralité de sous-porteuses modulées destinées à être transmises dans la bande de fréquences utiles avec une puissance sensiblement égale à la puissance utile,
- au moins une sous-porteuse modulée destinée à être transmise dans une zone de transition fréquentielle, la sous-porteuse modulée étant contrôlée en puissance relativement à ladite puissance utile de sorte à respecter le masque spectral d'émission dans la zone de transition fréquentielle.

Selon un tel procédé de démodulation, un dispositif de démodulation effectue, pour ledit au moins un canal de transmission :
- une démodulation de la pluralité de sous-porteuses modulées du signal transmises dans la bande de fréquences utiles délivrant une pluralité de symboles de modulation correspondants.

Le dispositif de démodulation effectue en outre, pour ladite au moins une sous-porteuse modulée du signal transmise dans une zone de transition fréquentielle :
- une démodulation de la sous-porteuse délivrant un symbole de modulation correspondant.

La démodulation comprend une décision souple du symbole de modulation et/ou d'au moins un bit d'information associé au symbole de modulation. La décision souple met en oeuvre une information relative au contrôle de puissance de la sous-porteuse, e.g. l'atténuation de la sous-porteuse en question relativement à la puissance utile des sous-porteuses modulées transmises dans la bande de fréquences utiles. L'information est partagée entre un dispositif de génération du signal et le dispositif de démodulation.

Ainsi, la structure du signal généré selon la présente technique permet de mettre en oeuvre à la réception une démodulation des sous-porteuses présentes dans les zones de transition fréquentielle de sorte à améliorer la quantité d'information reçue. Par ailleurs, la démodulation des sous-porteuses présentes dans les zones de transition fréquentielle se fait de manière améliorée, la connaissance de l'atténuation des sous-porteuses en question liée au respect du masque spectral d'émission étant prise en compte au niveau de décodage souple.

Selon certains modes de réalisation, le signal a été transmis sur une pluralité de canaux de transmission radiofréquences en respectant un masque spectral d'émission pour chaque canal, le signal comprenant, pour chaque canal de transmission :
- une pluralité de sous-porteuses modulées du signal destinées à être transmises dans la bande de fréquences utiles du canal,
- au moins une sous-porteuse modulée destinée à être transmise dans une zone de transition fréquentielle du canal, la sous-porteuse modulée étant contrôlée en puissance relativement à la puissance utile de sorte à respecter le masque spectral d'émission dans la zone de transition fréquentielle.

Le dispositif de démodulation effectue, pour chaque canal de transmission :
- une démodulation de la pluralité de sous-porteuses modulées du signal transmises dans la bande de fréquences utiles du canal délivrant une pluralité de symboles de modulation correspondants ; et
- pour ladite au moins une sous-porteuse modulée du signal transmise dans une zone de transition fréquentielle du canal, une démodulation de la sous-porteuse délivrant un symbole de modulation correspondant.

L'invention concerne également un programme d'ordinateur comprenant des instructions de code de programme pour la mise en oeuvre d'un procédé tel que décrit précédemment, selon l'un quelconque de ses différents modes de réalisation, lorsqu'il est exécuté sur un ordinateur. L'invention concerne également un dispositif de génération d'un signal radiofréquences du type multi-porteuses destiné à être transmis sur au moins un canal de transmission radiofréquences en respectant un masque spectral d'émission associé au canal. Un tel dispositif de génération comprend une machine de calcul reprogrammable ou une machine de calcul dédiée configurée pour mettre en oeuvre les étapes du procédé de génération tel que décrit précédemment (selon l'un quelconque des différents modes de réalisation précités). Ainsi, les caractéristiques et avantages de ce dispositif sont les mêmes que ceux des étapes correspondantes du procédé de génération décrit précédemment. Par conséquent, ils ne sont pas détaillés plus amplement. L'invention concerne également un dispositif de démodulation d'un signal généré par mise en oeuvre du procédé de génération tel que décrit précédemment (selon l'un quelconque des modes de réalisation précité). Un tel dispositif de démodulation comprend une machine de calcul reprogrammable ou une machine de calcul dédiée configurée pour mettre en oeuvre les étapes du procédé de démodulation tel que décrit précédemment (selon l'un quelconque des différents modes de réalisation précités). Ainsi, les caractéristiques et avantages de ce dispositif sont les mêmes que ceux des étapes correspondantes du procédé de démodulation décrit précédemment. Par conséquent, ils ne sont pas détaillés plus amplement.

L'invention concerne également un émetteur radiofréquences comprenant un dispositif de génération tel que décrit précédemment (selon l'un quelconque des différents modes de réalisation précités).

L'invention concerne également un récepteur radiofréquences comprenant un dispositif de démodulation tel que décrit précédemment (selon l'un quelconque des différents modes de réalisation précités).

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig.1****],** décrite ci-dessus en relation avec l'art antérieur, illustre un exemple de masque spectral d'émission tel que défini dans des standards utilisant des formes d'ondes du type multi-porteuses ;
**[****Fig.2****]** représente un réseau de radiocommunications comprenant un réseau d'amenée implémentant un lien radiofréquences mettant en oeuvre un signal du type multi-porteuses selon un mode de réalisation de l'invention ;
**[****Fig.2a****]** illustre les sous-porteuses modulées du signal du type multi-porteuses de la [Fig.2] selon un mode de réalisation de l'invention ;
**[****Fig.2b****]** illustre les sous-porteuses modulées du signal du type multi-porteuses de la [Fig.2] selon un autre mode de réalisation de l'invention ;
**[****Fig.3****]** représente les étapes d'un procédé de génération du signal du type multi-porteuses de la [Fig.2] selon un mode de réalisation de l'invention ;
**[****Fig.4****]** représente les étapes d'un procédé de démodulation du signal du type multi-porteuses généré par mise en oeuvre du procédé de la [Fig.3] selon un mode de réalisation de l'invention ;
**[****Fig.5****]** représente un exemple de structure de dispositif permettant la mise en oeuvre des étapes du procédé de génération de la [Fig.3] selon un mode de réalisation de l'invention ;
**[****Fig.6****]** représente un exemple de structure de dispositif permettant la mise en oeuvre des étapes du procédé de génération de la [Fig.4] selon un mode de réalisation de l'invention.

### Description détaillée de modes de réalisation de l'invention

Le principe général de l'invention repose sur l'utilisation des zones de transitions fréquentielles présentes dans les masques spectraux d'émission afin de transmettre des sous-porteuses véhiculant des symboles de modulation. De la sorte, le nombre total de sous-porteuses modulées utilisées au sein du signal transmis est accru, et donc le débit d'information véhiculé par le signal en question également pour un canal de transmission de largeur donné.

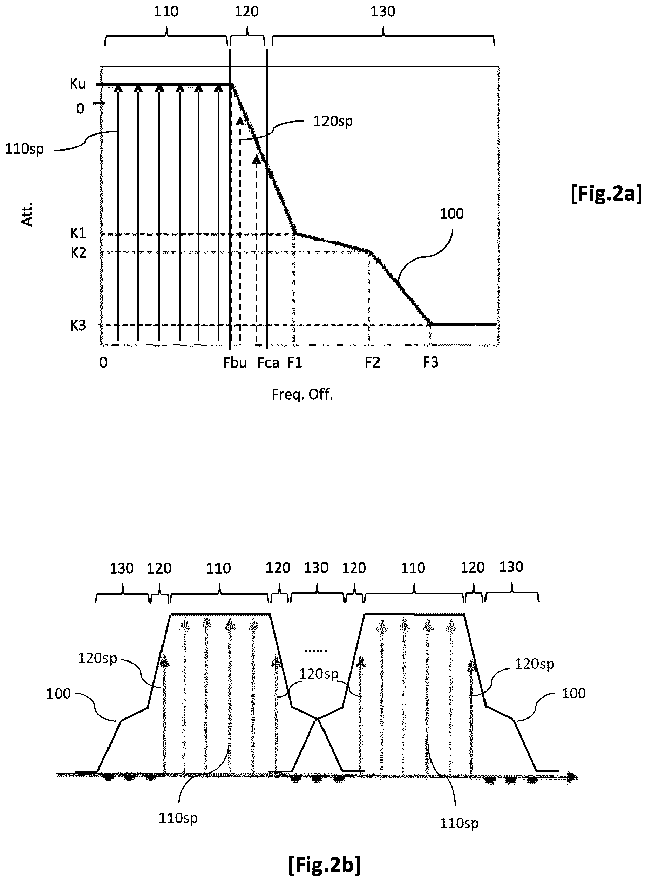

On présente désormais, en relation avec la **[****Fig.2****]** un réseau de radiocommunications comprenant un réseau d'amenée (ou « backhaul » dans la littérature anglo-saxonne) implémentant un lien radiofréquences mettant en oeuvre un signal du type multi-porteuses.

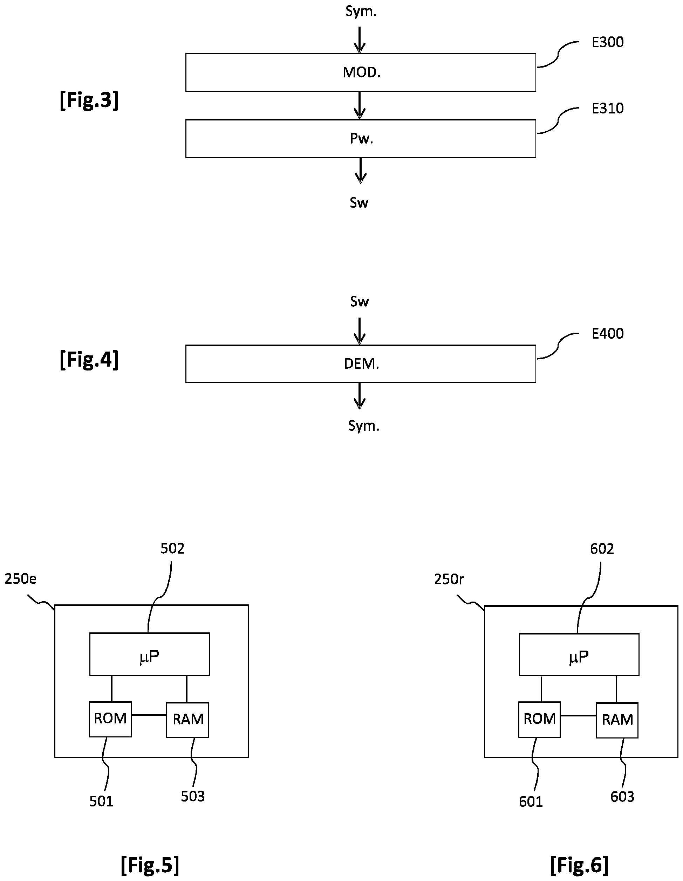

Plus particulièrement, le réseau de radiocommunications comprend ici une station de base 210 à laquelle est connecté de manière communicative un terminal mobile 200. La station de base 210 est connectée de manière communicative au coeur de réseau 240 via le réseau d'amenée comprenant un premier dispositif 220 émetteur/récepteur en communication avec un deuxième dispositif 230 émetteur/récepteur via un lien de radiocommunications mettant en oeuvre un signal du type multi-porteuses selon la présente technique. Pour ce faire, le premier dispositif 220 et le deuxième dispositif 230 comprennent chacun un dispositif 250e de génération et un dispositif 250r de démodulation mettant en oeuvre respectivement le procédé de génération décrit ci-dessous en relation avec la [Fig.3] et le procédé de démodulation décrit ci-dessous en relation avec la [Fig.4].

Par exemple, le signal du type multi-porteuses en question doit respecter le masque 100 spectral d'émission décrit ci-dessus en relation avec l'art antérieur. Cependant, dans d'autres modes de réalisation, le signal du type multi-porteuses considéré doit respecter un masque spectral d'émission tel que défini dans un autre standard de radiocommunications mettant en oeuvre un tel signal multi-porteuses.

De retour à la [Fig.2], le signal du type multi-porteuses mis en oeuvre par le lien de radiocommunications entre le premier dispositif 220 et le deuxième dispositif 230 est par exemple un signal du type FBMC ou OFDM tel que décrit ci-dessus en relation avec l'art antérieur. Cependant, contrairement aux techniques connues, le signal comprend non seulement des sous-porteuses 110sp modulées dans la bande 110 de fréquences utiles, mais également des sous-porteuses 120sp modulées dans la (ou les) zone 120 de transition fréquentielle comme illustré sur la **[****Fig.2a****].** De la sorte le débit d'information véhiculé par le signal en question est accru pour un canal de transmission de largeur donné.

Dans d'autres modes de réalisation, le signal mis en oeuvre par le lien de radiocommunications entre le premier dispositif 220 et le deuxième dispositif 230 est transmis non pas via un seul canal de transmission, mais via une pluralité de canaux de transmission comme illustré sur la **[****Fig.2b****].** Une telle configuration est par exemple référencée dans les standards de radiocommunications sous l'appellation d'agrégation de canaux de transmission. Une telle agrégation peut concerner des canaux non adjacents, comme illustré sur la [Fig.2b], ou des canaux adjacents. Les standards de radiocommunications définissent généralement dans ces configurations un masque 100 spectral d'émission par canal de transmission, le masque 100 pouvant être le même pour chaque canal ou des masques 100 différents pouvant être définis pour des canaux différents.

De retour à la [Fig.2], le signal du type multi-porteuses selon la présente technique est utilisé dans une liaison point à point entre le premier dispositif 220 et le deuxième dispositif 230. Cependant, dans d'autres modes de réalisation, un tel signal est mis en oeuvre dans d'autres types de liaisons, e.g. entre un équipement terminal et un point d'accès d'un réseau local, entre un équipement terminal et une station de base d'un réseau de radiocommunication, entre un émetteur d'un réseau de radiodiffusion et un récepteur correspondant, etc.

On présente désormais, en relation avec la **[****Fig.3****]** les étapes d'un procédé de génération d'un signal du type multi-porteuses selon un mode de réalisation de l'invention. Un tel signal correspond par exemple au signal mis en oeuvre par le lien de radiocommunications entre le premier dispositif 220 et le deuxième dispositif 230. Suivant les modes de réalisation présentés ci-dessus en relation avec les [Fig.2a] et [Fig.2b], un tel signal est destiné à être transmis soit sur un seul canal de transmission ([Fig.2a]) en respectant un masque 100 spectral d'émission associé au canal, soit sur une pluralité de canaux de transmission ([Fig.2b]) en respectant un masque 100 spectral d'émission associé à chaque canal.

Ainsi, pour au moins un canal de transmission, lors d'une **étape E300,** le dispositif 250e de génération effectue une modulation, par des symboles de modulation, d'une pluralité de sous-porteuses délivrant une pluralité correspondante de sous-porteuses 110sp modulées du signal. Les sous-porteuses 110sp modulées sont destinées à être transmises dans la bande 110 de fréquences utiles avec une puissance sensiblement égale à la puissance utile Ku. Il s'agit ainsi de sous-porteuses telles qu'on peut les rencontrer dans les techniques connues de génération de signaux multi-porteuses telles que par exemple mises en oeuvre dans les différents standards de radiocommunications.

Cependant, selon la présente technique, lors l'étape E300, le dispositif 250e de génération effectue en outre, pour au moins une sous-porteuse destinée à être transmise dans une zone 120 de transition fréquentielle, la modulation de la sous-porteuse en question par un symbole de modulation correspondant, délivrant une sous-porteuse 120sp modulée du signal. Par ailleurs, lors d'une **étape E310,** le dispositif 250e de génération effectue un contrôle de puissance de la sous-porteuse 120sp modulée relativement à la puissance utile Ku de sorte à avoir le signal ainsi généré qui respecte le masque 100 spectral d'émission dans la zone 120 de transition fréquentielle. Un tel contrôle de puissance peut se faire soit dans la domaine numérique avant transposition du signal dans le domaine radiofréquences (e.g. via une multiplication numérique), soit directement dans le domaine radiofréquences (e.g. via l'utilisation d'un filtre analogique radiofréquences).

Ainsi, contrairement à la technique dite de « water-filling » décrite ci-dessus en relation avec la l'art antérieur, le contrôle de puissance ne dépend pas ici d'informations liées à la connaissance du canal de propagation, mais dépend uniquement du masque 100 spectral d'émission devant être respecté.

Par ailleurs, suivant la nature du signal considéré, e.g. OFDM ou FBMC, une telle génération peut se faire par adaptation directe d'un modulateur connu en soi de sorte à générer la sous-porteuse 120sp modulée au lieu de la mettre à zéro. En particulier, le contrôle de puissance ne conduit pas ici à une extinction de la (ou des) sous-porteuse 120sp modulée de sorte que la (ou des) sous-porteuse 120sp modulée soit effectivement transmise avec une puissance non nulle. En pratique, le contrôle de puissance conduit à une simple atténuation de la (ou des) sous-porteuse 120sp modulée relativement à la puissance utile Ku de sorte à suivre la décroissance du masque 100 spectral d'émission dans la (ou les) zone 120 de transition fréquentielle. Une telle atténuation s'applique à l'ensemble du signal correspondant à la (ou les) sous-porteuse 120sp modulée, et donc atténue également les lobes secondaires correspondant. Ceci permet notamment de limiter la pollution des canaux adjacents via les lobes secondaires de la (ou des) sous-porteuse 120sp maintenant modulée. De la sorte, la présente technique peut s'appliquer à des formes d'onde OFDM, même si le bon confinement spectral des formes d'ondes du type OFDM filtré ou FBMC permet d'envisager d'utiliser plus de sous-porteuses 120sp modulées dans la (ou les) zone 120 de transition fréquentielle.

Dans certains modes de réalisation, la (ou les) sous-porteuse 120sp modulée destinée à être transmise dans une zone 120 de transition fréquentielle est transmise sur une fréquence porteuse adjacente à la bande 110 de fréquences utiles.

Ainsi, le spectre du signal généré est continu. De même, les sous-porteuses les plus proches de la bande 110 de fréquences utiles sont également les plus éloignées des canaux adjacents, ce qui limite ainsi la pollution des canaux adjacents en question. Par ailleurs, les sous-porteuses les plus proches de la bande de fréquences utiles sont celles dont la puissance est la moins réduite afin de respecter le masque spectral d'émission. Le rapport signal à bruit est ainsi mieux préservé, et le débit d'information véhiculé par le signal amélioré.

Dans certains modes de réalisation, un schéma de codage et/ou un ordre de modulation de la (ou des) sous-porteuse 120sp modulée destinée à être transmise dans une zone 120 de transition fréquentielle est adapté par rapport au schéma de codage et/ou à l'ordre de modulation des sous-porteuses 110sp modulées destinées à être transmises dans la bande 110 de fréquences utiles de sorte à prendre en compte le contrôle de puissance effectué sur la (ou des) sous-porteuse 120sp modulée en question.

Par exemple, l'atténuation des de la (ou des) sous-porteuse 120sp modulée de sorte à suivre la décroissance du masque 100 spectral d'émission conduit à une réduction du rapport signal à bruit sur la (ou les) sous-porteuse 120sp modulée en question. Une telle réduction est ainsi prise en compte via la réduction de l'ordre de la modulation utilisée pour la (ou les) sous-porteuse 120sp modulée en question et/ou via un schéma de codage plus robuste, quand bien même le débit s'en trouve légèrement réduit.

Dans certains modes de réalisation, le contrôle de puissance est limité à une amplitude de contrôle prédéterminé, par exemple une atténuation de 5 dB.

Ainsi, la réduction du rapport signal à bruit sur la (ou des) sous-porteuse 120sp modulée est limité. En effet, utiliser des sous-porteuses pour lesquelles la réduction du rapport signal à bruit serait supérieure au seuil considéré n'apporterait pas nécessairement de gain sur le débit de données véhiculées.

Dans certains modes de réalisation dans lesquels le signal radiofréquences est destiné à être transmis sur une pluralité de canaux de transmission radiofréquences en respectant un masque 100 spectral d'émission pour chaque canal (configuration présentée ci-dessus en relation avec la [Fig.2b]), le dispositif 250e de génération effectue pour chaque canal de transmission les étapes E300 et E310 (selon l'un quelconque des modes de réalisation précités). De la sorte, une pluralité correspondante de sous-porteuses 110sp modulées destinées à être transmises dans la bande 110 de fréquences utiles de chaque canal est obtenue, ainsi qu'au moins une sous-porteuse 120sp destinée à être transmise dans une zone 120 de transition fréquentielle de chaque canal.

Dans certains modes de réalisation, les sous-porteuses modulées des différents canaux de transmission sont agrégées, e.g. via une sommation, entre elles en bande de base (e.g. numériquement) avant transposition dans le domaine radiofréquences afin d'obtenir le signal radiofréquences complet. Alternativement, un signal radiofréquences partiel peut être généré pour chaque canal de transmission par transposition dans le domaine radiofréquences des sous-porteuses modulées du canal en question. Le signal radiofréquences complet est ainsi obtenu par agrégation, e.g. via une sommation, des signaux partiels directement dans le domaine radiofréquences.

On présente désormais, en relation avec la **[****Fig.4****]** les étapes d'un procédé de démodulation d'un signal du type multi-porteuses tel que généré par mise en oeuvre du procédé de la [Fig.3], selon un mode de réalisation de l'invention.

Plus particulièrement, pour au moins un canal de transmission, lors d'une **étape E400,** le dispositif 250r de démodulation effectue une démodulation de la pluralité de sous-porteuses 110sp modulées du signal qui sont transmises dans la bande 110 de fréquences utiles. Comme détaillé ci-dessus, il s'agit de sous-porteuses modulées telles qu'on peut les rencontrer dans les signaux multi-porteuses mis en oeuvre dans les systèmes de radiocommunications connus.

Cependant, lors l'étape E400, le dispositif 250r de démodulation effectue en outre pour au moins une sous-porteuse 120sp modulée du signal transmise dans une zone 120 de transition fréquentielle, une démodulation de la sous-porteuse délivrant un symbole de modulation correspondant. Suivant la nature du signal considéré, e.g. OFDM ou FBMC, une telle démodulation peut se faire par adaptation directe d'un démodulateur connu en soi de sorte à démoduler la sous-porteuse 120sp en plus des sous-porteuses 110sp.

Dans certains modes de réalisation, la démodulation comprend une décision souple du symbole de modulation et/ou d'au moins un bit d'information associé au symbole de modulation en question. La décision souple met en oeuvre une information relative au contrôle de puissance de la sous-porteuse véhiculant le symbole de modulation en question en question. L'information est partagée entre le dispositif 250e de génération du signal et le dispositif 250d de démodulation. Ainsi, la démodulation des sous-porteuses 120sp modulées présentes dans les zones 120 de transition fréquentielle se fait de manière améliorée, la connaissance de l'atténuation des sous-porteuses 120sp modulées liée au respect du masque spectral d'émission étant prise en compte au niveau de décodage souple. Par exemple, l'information relative au contrôle de puissance d'un sous-porteuse 120sp modulée peut-être une information prédéterminée paramétrée (e.g. pendant la production, ou pendant une mise à jour, du dispositif 250e de génération et du dispositif 250r de démodulation), ou bien une information transmise via les données véhiculées par le signal lui-même.

Dans certains modes de réalisation précités dans lesquels le signal radiofréquences est destiné à être transmis sur une pluralité de canaux de transmission radiofréquences en respectant un masque 100 spectral d'émission pour chaque canal (configuration présentée ci-dessus en relation avec la [Fig.2b]), le dispositif 250r de démodulation effectue pour chaque canal de transmission l'étape E400 (selon l'un quelconque des modes de réalisation précités). De la sorte, une pluralité de symboles de modulation véhiculés par la pluralité de sous-porteuses 110sp modulées transmises dans la bande 110 de fréquences utiles de chaque canal est obtenue. De même, au moins un symbole de modulation véhiculé par une sous-porteuse 120sp modulée du signal transmise dans une zone 120 de transition fréquentielle de chaque canal est obtenu.

On présente désormais, en relation avec la **[****Fig.5****]** un exemple de structure de dispositif 250e de génération permettant de mettre en oeuvre les étapes du procédé de génération de la [Fig.3] selon un mode de réalisation de l'invention.

Le dispositif 250e de génération comprend une mémoire vive 503 (par exemple une mémoire RAM), une unité de traitement 502 équipée par exemple d'un processeur, et pilotée par un programme d'ordinateur stocké dans une mémoire morte 501 (par exemple une mémoire ROM ou un disque dur). A l'initialisation, les instructions de code du programme d'ordinateur sont par exemple chargées dans la mémoire vive 503 avant d'être exécutées par le processeur de l'unité de traitement 502.

Cette [Fig.5] illustre seulement une manière particulière, parmi plusieurs possibles, de réaliser le dispositif 250e de génération afin qu'il effectue certaines étapes du procédé de génération de la [Fig.3] (selon l'un quelconque des modes de réalisation décrits ci-dessus en relation avec la [Fig.3]). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 250e de génération est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

Dans certains modes de réalisation, le dispositif 250e de génération est inclus dans un émetteur radiofréquence.

On présente désormais, en relation avec la **[****Fig.6****]** un exemple de structure de dispositif 250d de démodulation permettant de mettre en oeuvre les étapes du procédé de démodulation de la [Fig.4] selon un mode de réalisation de l'invention.

Le dispositif 250d de démodulation comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette [Fig.6] illustre seulement une manière particulière, parmi plusieurs possibles, de réaliser le dispositif 250d de démodulation afin qu'il effectue certaines étapes du procédé de démodulation de la [Fig.4] (selon l'un quelconque des modes de réalisation décrits ci-dessus en relation avec la [Fig.4]). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 250d de démodulation est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

Dans certains modes de réalisation, le dispositif 250d de démodulation est inclus dans un récepteur radiofréquence.

## Revendications

1. Procédé de génération d'un signal radiofréquences du type multi-porteuses destiné à être transmis sur au moins un canal de transmission radiofréquences en respectant un masque (100) spectral d'émission associé audit canal, le masque définissant, en fonction de la fréquence, une exigence d'atténuation dudit signal relativement à une puissance du signal, dite puissance utile, dans une bande (110) de fréquences utiles inférieure à la largeur du canal, l'exigence d'atténuation étant définie pour au moins une zone (120) de transition fréquentielle entre un bord (Fbu) de la bande de fréquences utiles et un bord (Fca) adjacent du canal de transmission,
dans lequel un dispositif (250e) de génération effectue une modulation (E300), par des symboles de modulation, d'une pluralité de sous-porteuses délivrant une pluralité correspondante de sous-porteuses (110sp) modulées dudit signal destinées à être transmises dans la bande de fréquences utiles avec une puissance sensiblement égale à la puissance utile,
**caractérisé en ce que** le dispositif (250e) de génération effectue en outre, pour au moins une sous-porteuse destinée à être transmise dans une zone (120) de transition fréquentielle :
- une modulation (E300) de la sous-porteuse par un symbole de modulation correspondant, délivrant une sous-porteuse (120sp) modulée dudit signal ; et
- un contrôle de puissance (E310) de la sous-porteuse (120sp) modulée relativement à ladite puissance utile de sorte à respecter le masque spectral d'émission dans la zone de transition fréquentielle, ledit contrôle de puissance étant limité à une amplitude de contrôle prédéterminé.

2. Procédé de génération selon la revendication 1, dans lequel ladite au moins une sous-porteuse destinée à être transmise dans une zone de transition fréquentielle est transmise sur une fréquence porteuse adjacente à la bande de fréquences utiles.

3. Procédé de génération selon la revendication 1 ou 2, dans lequel un schéma de codage et/ou un ordre de modulation de ladite au moins une sous-porteuse destinée à être transmise dans une zone de transition fréquentielle est adapté par rapport au schéma de codage et/ou à l'ordre de modulation des sous-porteuses destinées à être transmises dans la bande de fréquences utiles de sorte à prendre en compte ledit contrôle de puissance.

4. Procédé de génération selon l'une quelconque des revendications 1 à 3, dans lequel ladite modulation et ledit contrôle de puissance sont mis en oeuvre pour une pluralité de sous-porteuses destinées à être transmises dans une zone de transition fréquentielle.

5. Procédé de génération selon l'une quelconque des revendications 1 à 4, dans lequel ledit signal radiofréquences est destiné à être transmis sur une pluralité de canaux de transmission radiofréquences en respectant un masque spectral d'émission pour chaque canal,
et dans lequel, le dispositif de génération effectue pour chaque canal de transmission :
- ladite modulation d'une pluralité de sous-porteuses délivrant une pluralité correspondante de sous-porteuses modulées dudit signal destinées à être transmises dans la bande de fréquences utiles du canal ; et
- pour au moins une sous-porteuse destinée à être transmise dans une zone de transition fréquentielle du canal, ladite modulation de la sous-porteuse et ledit contrôle de puissance de la sous-porteuse modulée.

6. Procédé de démodulation d'un signal radiofréquences du type multi-porteuses destiné à être transmis sur au moins un canal de transmission radiofréquences en respectant un masque (100) spectral d'émission associé audit canal, le masque définissant, en fonction de la fréquence, une exigence d'atténuation dudit signal relativement à une puissance du signal, dite puissance utile, dans une bande (110) de fréquences utiles inférieure à la largeur du canal, l'exigence d'atténuation étant définie pour au moins une zone (120) de transition fréquentielle entre un bord (Fbu) de la bande de fréquences utiles et un bord (Fca) adjacent du canal de transmission, le signal comprenant :
- une pluralité de sous-porteuses (110sp) modulées destinées à être transmises dans la bande de fréquences utiles avec une puissance sensiblement égale à la puissance utile,
- au moins une sous-porteuse modulée destinée à être transmise dans une zone (120) de transition fréquentielle, la sous-porteuse modulée étant contrôlée en puissance relativement à ladite puissance utile de sorte à respecter le masque spectral d'émission dans la zone de transition fréquentielle,
dans lequel un dispositif (250r) de démodulation effectue, pour ledit au moins un canal de transmission, une démodulation (E400) de la pluralité de sous-porteuses (110sp) modulées dudit signal transmises dans la bande de fréquences utiles délivrant une pluralité de symboles de modulation correspondants,
**caractérisé en ce que** le dispositif de démodulation effectue en outre, pour ladite au moins une sous-porteuse (120sp) modulée dudit signal transmise dans une zone (120) de transition fréquentielle, une démodulation (E400) de la sous-porteuse délivrant un symbole de modulation correspondant,
dans lequel ladite démodulation comprend une décision souple dudit symbole de modulation et/ou d'au moins un bit d'information associé audit symbole de modulation,
ladite décision souple mettant en oeuvre une information relative au contrôle de puissance de la sous-porteuse,
ladite information étant partagée entre un dispositif de génération dudit signal et ledit dispositif de démodulation.

7. Procédé de démodulation selon la revendication 6, dans lequel le signal radiofréquences est destiné à être transmis sur une pluralité de canaux de transmission radiofréquences en respectant un masque spectral d'émission pour chaque canal, le signal comprenant, pour chaque canal de transmission :
- une pluralité de sous-porteuses modulées dudit signal destinées à être transmises dans la bande de fréquences utiles du canal,
- au moins une sous-porteuse modulée destinée à être transmise dans une zone de transition fréquentielle du canal, la sous-porteuse modulée étant contrôlée en puissance relativement à ladite puissance utile de sorte à respecter le masque spectral d'émission dans la zone de transition fréquentielle,
et dans lequel le dispositif de démodulation effectue, pour chaque canal de transmission :
- une démodulation de la pluralité de sous-porteuses modulées dudit signal transmises dans la bande de fréquences utiles du canal délivrant une pluralité de symboles de modulation correspondants ; et
- pour ladite au moins une sous-porteuse modulée dudit signal transmise dans une zone de transition fréquentielle du canal, une démodulation de la sous-porteuse délivrant un symbole de modulation correspondant.

8. Produit programme d'ordinateur comprenant des instructions de code de programme pour la mise en oeuvre d'un procédé selon l'une quelconque des revendications 1 à 7, lorsque ledit programme est exécuté sur un ordinateur.

9. Dispositif (250e) de génération d'un signal radiofréquences du type multi-porteuses destiné à être transmis sur au moins un canal de transmission radiofréquences en respectant un masque (100) spectral d'émission associé audit canal, le masque définissant, en fonction de la fréquence, une exigence d'atténuation dudit signal relativement à une puissance du signal, dite puissance utile, dans une bande (110) de fréquences utiles inférieure à la largeur du canal, l'exigence d'atténuation étant définie pour au moins une zone (120) de transition fréquentielle entre un bord (Fbu) de la bande de fréquences utiles et un bord (Fca) adjacent du canal de transmission,
le dispositif (250e) de génération comprenant une machine de calcul reprogrammable (502) ou une machine de calcul dédiée configurée pour effectuer une modulation, par des symboles de modulation, d'une pluralité de sous-porteuses délivrant une pluralité correspondante de sous-porteuses (110sp) modulées dudit signal destinées à être transmises dans la bande de fréquences utiles avec une puissance sensiblement égale à la puissance utile,
**caractérisé en ce que** la machine de calcul reprogrammable (502) ou la machine de calcul dédiée est configurée pour effectuer en outre, pour au moins une sous-porteuse destinée à être transmise dans une zone (120) de transition fréquentielle :
- une modulation de la sous-porteuse par un symbole de modulation correspondant, délivrant une sous-porteuse (120sp) modulée dudit signal ; et
- un contrôle de puissance de la sous-porteuse (120sp) modulée relativement à ladite puissance utile de sorte à respecter le masque spectral d'émission dans la zone de transition fréquentielle, ledit contrôle de puissance étant limité à une amplitude de contrôle prédéterminé.

10. Dispositif (250r) de démodulation d'un signal radiofréquences du type multi-porteuses destiné à être transmis sur au moins un canal de transmission radiofréquences en respectant un masque (100) spectral d'émission associé audit canal, le masque définissant, en fonction de la fréquence, une exigence d'atténuation dudit signal relativement à une puissance du signal, dite puissance utile, dans une bande (110) de fréquences utiles inférieure à la largeur du canal, l'exigence d'atténuation étant définie pour au moins une zone (120) de transition fréquentielle entre un bord (Fbu) de la bande de fréquences utiles et un bord (Fca) adjacent du canal de transmission, le signal comprenant :
- une pluralité de sous-porteuses (110sp) modulées destinées à être transmises dans la bande de fréquences utiles avec une puissance sensiblement égale à la puissance utile,
- au moins une sous-porteuse modulée destinée à être transmise dans une zone (120) de transition fréquentielle, la sous-porteuse modulée étant contrôlée en puissance relativement à ladite puissance utile de sorte à respecter le masque spectral d'émission dans la zone de transition fréquentielle,
le dispositif comprenant une machine de calcul reprogrammable (602) ou une machine de calcul dédiée configurée pour effectuer, pour ledit au moins un canal de transmission, une démodulation (E400) de la pluralité de sous-porteuses (110sp) modulées dudit signal transmises dans la bande de fréquences utiles délivrant une pluralité de symboles de modulation correspondants,
**caractérisé en ce que** la machine de calcul reprogrammable (602) ou la machine de calcul dédiée est configurée pour effectuer en outre, pour ladite au moins une sous-porteuse (120sp) modulée dudit signal transmise dans une zone (120) de transition fréquentielle, une démodulation (E400) de la sous-porteuse délivrant un symbole de modulation correspondant, dans lequel ladite démodulation comprend une décision souple dudit symbole de modulation et/ou d'au moins un bit d'information associé audit symbole de modulation,
ladite décision souple mettant en oeuvre une information relative au contrôle de puissance de la sous-porteuse,
ladite information étant partagée entre un dispositif de génération dudit signal et ledit dispositif de démodulation.

11. Emetteur (220, 230) radiofréquences **caractérisé en ce qu'**il comprend un dispositif de génération selon la revendication 9.

12. Récepteur (220, 230) radiofréquences **caractérisé en ce qu'**il comprend un dispositif de démodulation selon la revendication 10.
